# EUROPÄISCHE PATENTSCHRIFT

(11) **EP 2 388 092 B1**
(45) Veröffentlichungstag und Bekanntmachung des Hinweises auf die Patenterteilung: **12.07.2017**
(21) Anmeldenummer: 11166556.8
(22) Anmeldetag: 18.05.2011
(51) Int. Cl.: B23B 3/06, B23B 31/20

(54) **Führungseinrichtung und Werkzeugmaschine mit einer derartigen Führungseinrichtung**
Guide device and machine tool with such a guide device
Dispositif de guidage et machine-outil dotée d'un tel dispositif de guidage

(30) Priorität: 21.05.2010 DE 102010029242
(43) Veröffentlichungstag der Anmeldung: 23.11.2011
(73) Patentinhaber: Index-Werke GmbH & Co. KG Hahn & Tessky, 73730 Esslingen (DE)
(72) Erfinder: Ding, Zhiyi, 73240, Wendlingen (DE); Forst, Heinz, 73773, Aichwald (DE)
(74) Vertreter: Hoeger, Stellrecht & Partner Patentanwälte mbB

(56) Entgegenhaltungen:
- DE-A1-102007 042 189
- US-A- 628 730
- US-A- 4 061 061
- US-A1- 2002 053 771

## Beschreibung

Die Erfindung betrifft eine Führungseinrichtung gemäß dem Oberbegriff des Anspruchs 1 für ein in einer Arbeitsspindel aufgenommenes Werkstück einer Langdrehmaschine, wobei die Führungseinrichtung und das Werkstück in Richtung einer Spindelachse der Arbeitsspindel relativ zueinander bewegbar sind, wobei die Führungseinrichtung eine um die Spindelachse drehbar in einem Außengehäuse gelagerte Spindelhülse sowie eine in der Spindelhülse aufgenommene Führungseinheit aufweist, die das Werkstück mittels Führungsflächen führt, wobei die Führungsflächen in radialer Richtung zur Spindelachse relativ zum Werkstück mittels einer mit der Führungseinheit zusammenwirkenden Einstelleinrichtung einstellbar sind.

Eine derartige Führungseinrichtung ist beispielsweise aus der DE 10 2007 042 189 A1 bekannt, wobei bei dieser die Einstelleinrichtung so ausgebildet ist, dass eine radiale Bewegung der Führungseinheit gleichzeitig eine axiale Bewegung relativ zur Spindelhülse zur Folge hat. Dies beeinträchtigt die Präzision der Führung des Werkstücks bei hochpräzisen Bearbeitungsvorgängen.

Der Erfindung liegt daher die Aufgabe zugrunde, eine Führungseinrichtung der gattungsgemäßen Art derart zu verbessern, dass diese eine größere Präzision bei der Führung des Werkstücks ermöglicht.

Diese Aufgabe wird bei einer Führungseinrichtung der eingangs beschriebenen Art erfindungsgemäß dadurch gelöst, dass in einem Bearbeitungsmodus die Führungseinheit axial unverschieblich relativ zur Spindelhülse positioniert ist und durch mindestens ein zwischen der Spindelhülse und der Führungseinheit angeordnetes und relativ zur Spindelhülse und der Führungseinheit bewegbares Stellelement bewegbar ist, welches einen als Keilkörper wirksamen Stellbereich aufweist und welches durch eine Stellkrafterzeugungseinheit bewegbar ist und dass die Führungsflächen durch die Stellkrafterzeugungseinheit kraftsteuerbar in ausschließlich zur Spindelachse radialer Zustellrichtung auf das Werkstück zustellbar sind.

Der Vorteil der erfindungsgemäßen Lösung ist darin zu sehen, dass mit dieser die Möglichkeit besteht, in dem Bearbeitungsmodus das Werkstück mit den Führungsflächen in Zustellrichtung mit einer steuerbaren Kraft zu beaufschlagen, wobei eine Variation der Kraft, mit der die Führungsflächen auf das Werkstück wirken, nicht die Präzision der Führung beeinträchtigt und vor allem keine Präzisionsungenauigkeit in Richtung der Spindelachse erzeugt.

Die Stellkrafterzeugungseinheit kann dabei in unterschiedlichster Art und Weise ausgebildet sein.

Beispielsweise könnte ein Stellmotor mit einer Gewindespindel vorgesehen sein.

Es wäre aber auch denkbar, eine nach dem Prinzip eines Linearmotors arbeitende Stellkrafterzeugungseinheit vorzusehen.

Eine besonders günstige Lösung sieht vor, dass die Stellkrafterzeugungseinheit als eine durch ein unter Druck stehendes Medium beaufschlagbare Stellkrafterzeugungseinheit ausgebildet ist.

Um die Stellkrafterzeugungseinheit in einfacher Art und Weise betätigen zu können, ist vorzugsweise vorgesehen, dass die Stellkrafterzeugungseinheit relativ zur Aufnahme nicht drehend angeordnet ist.

Besonders günstig ist es dabei, wenn zwischen der Stellkrafterzeugungseinheit und dem Stellelement ein Drehlager wirksam ist, um eine Stellbewegung auf das mit der Spindelhülse und der Führungseinheit mitdrehende Stellelement zu übertragen.

Hinsichtlich der Bewegbarkeit des Stellelements wurden bislang keine weiteren Angaben gemacht.

Beispielsweise wäre es denkbar, das Stellelement relativ zur Spindelachse drehbar auszubilden.

Eine besonders günstige Lösung sieht jedoch vor, dass das Stellelement parallel zur Spindelachse bewegbar ist.

Dabei ist es besonders günstig, wenn das Stellelement ausschließlich parallel zur Spindelachse bewegbar ist.

Hinsichtlich der Wirkung des Stellelements auf die Führungseinheit wurden bislang keine näheren Angaben gemacht.

So sieht eine vorteilhafte Lösung vor, dass der Stellbereich zusammen mit der Spindelhülse und Führungselementen der Führungseinheit ein Keilgetriebe bildet.

Um ein derartiges Keilgetriebe möglichst leicht laufend auszubilden, ist vorzugsweise vorgesehen, dass zwischen der Spindelhülse und dem Stellbereich Verschiebeführungen angeordnet sind, die den Stellbereich in Richtung quer zur Spindelachse abstützen.

Ferner ist vorzugsweise vorgesehen, dass zwischen dem Stellbereich und den Führungselementen der Führungseinheit Verschiebeführungen angeordnet sind, welche die Führungselemente in Richtung quer zur Spindelachse abstützen.

Insgesamt bilden somit die Verschiebeführungen leicht laufende Führungen zwischen der Spindelhülse und dem Stellbereich sowie dem Stellbereich und den Führungselementen, um einerseits eine ausreichende Abstützung der auf die Führungsflächen wirkenden Kräfte zu erhalten und andererseits den Stellbereich mit geringen Kräften bewegen zu können, um die Führung auf das Werkstück zuzustellen.

Besonders vorteilhaft ist es dabei, wenn die Verschiebeführungen Verschieberichtungen, insbesondere geradlinig verlaufende Verschieberichtungen, aufweisen, die in einem spitzen Winkel zueinander verlaufen, um dadurch die Wirkung eines Keilgetriebes zu erzeugen.

Besonders günstig ist es, wenn die Verschiebeführungen als wälzkörpergelagerte Führungen ausgebildet sind, um möglichst wenig Reibungswiderstand beim Bewegen des Stellelements relativ zu der Spindelhülse und den Führungselementen zu erhalten.

Hinsichtlich der Relativposition der Führungseinheit relativ zur Spindelhülse in Richtung parallel zur Spindelachse wurden bislang keine näheren Angaben gemacht.

Grundsätzlich könnte diese Relativposition durch geeignete Verbindungselemente fest vorgegeben sein.

Eine vorteilhafte Lösung sieht jedoch vor, dass die Relativposition der Führungseinheit zur Spindelhülse in einem Einstellmodus durch eine Einstelleinrichtung einstellbar ist, um eine Anpassung an verschiedene Werkstückdurchmesser vornehmen zu können.

In diesem Einstellmodus besteht somit die Möglichkeit einer Voreinstellung der Stelleinheit, insbesondere der Führungselemente derselben und somit eine Voreinstellung der Position der Führungsflächen relativ zu dem Werkstück, insbesondere des radialen Abstandes der Führungsflächen von der Spindelachse.

Vorzugsweise ist dabei die Einstelleinrichtung als mechanische Stelleinheit ausgebildet und eine derartige mechanische Stelleinheit ist insbesondere manuell einstellbar.

Die durch ein unter Druck stehendes Medium beaufschlagbare Stellkrafterzeugungseinheit wurde im Zusammenhang mit den bisherigen Ausführungsformen nicht näher spezifiziert.

So kann die Stellkrafterzeugungseinheit als ein konventionelles System mit einer Zylinderkammer und einem in dieser bewegbaren Kolben ausgebildet sein.

Eine andere vorteilhafte Lösung sieht jedoch vor, anstelle eines Kolbens eine Membran, beispielsweise eine Metallmembran, einzusetzen die den Vorteil hat, dass zu Beginn einer Bewegung keine Haftreibung im Bereich einer Abdichtung des Kolbens zu überwinden ist und somit eine sehr exakte Vorgabe der Kraft möglich ist.

Darüber hinaus wurden im Zusammenhang mit der bisherigen Erläuterung der einzelnen Ausführungsformen keine Ausführungen zu der Ansteuerung der Stellkrafterzeugungseinheit gemacht.

Eine besonders zweckmäßige Lösung sieht dabei vor, dass das der Stellkrafterzeugungseinheit zugeführte Medium durch eine Maschinensteuerung steuerbar ist, so dass mit der Steuerung der Langdrehmaschine die Möglichkeit besteht, auch die Kraft, mit welchen die Führungsflächen radial in Zustellrichtung auf das Werkstück wirken, einzustellen.

Dies eröffnet beispielsweise die Möglichkeit, diese Kraft abhängig von den einzelnen Funktionszuständen der Langdrehmaschine zu variieren.

Besonders günstig ist es dabei, wenn der Druck im Bearbeitungsmodus bei unterschiedlichen Bearbeitungsvorgängen unterschiedlich einstellbar ist.

Das heißt, wenn beispielsweise ein loses Vorschieben des Werkstücks im Bearbeitungsmodus erfolgen soll, kann der Druck auf Null abgesenkt werden und somit das Werkstück, insbesondere die Werkstoffstange, mit geringem Spiel durch die Führungseinheit und die Führungselemente hindurchgeschoben werden.

Erfolgt beispielsweise eine Bearbeitung des Werkstücks unter einer gleichzeitigen Bewegung desselben parallel zur Spindelachse, das heißt in Z-Richtung, so wird der Druck des Mediums auf ein erstes Druckniveau angehoben, das einerseits noch eine ausreichende Führung in radialer Richtung und somit eine ausreichende Präzision der Führung in radialer Richtung gewährleistet, andererseits aber auch noch eine Vorschubbewegung des Werkstücks relativ zu den Führungsflächen der Führungselemente in Z-Richtung zulässt, wobei damit in diesem Fall ein Kompromiss zwischen der Verschiebbarkeit des Werkstücks in Z-Richtung und der Exaktheit der Positionierung in radialer Richtung zur Spindelachse, das heißt in X-Richtung, eingegangen wird.

In einem weiteren Fall besteht die Möglichkeit, insbesondere dann, wenn kein Vorschub des Werkstücks in Z-Richtung für die Bearbeitung vorgesehen ist, den Druck des Mediums auf ein zweites, über dem ersten Druckniveau liegendes Druckniveau anzuheben und in diesem Fall eine möglichst exakte Führung des Werkstücks relativ zur Spindelachse zu erhalten, so dass die Bearbeitung des Werkstücks in diesem Fall mit höherer Präzision relativ zur Spindelachse möglich ist.

Darüber hinaus betrifft die Erfindung eine Langdrehmaschine, umfassend ein Maschinengestell, eine am Maschinengestell gehaltene Arbeitsspindel, eine am Maschinengestell gehaltene Führungseinrichtung für ein in der Arbeitsspindel aufgenommenes Werkstück, wobei die Führungseinrichtung und das Werkstück in Richtung einer Spindelachse der Arbeitsspindel relativ zueinander bewegbar sind, wobei die Führungseinrichtung eine um die Spindelachse drehbar in einem Außengehäuse gelagerte Spindelhülse sowie eine in der Spindelhülse aufgenommene Führungseinheit aufweist, die das Werkstück mittels Führungsflächen führt, und wobei die Führungsflächen in radialer Richtung der Spindelachse relativ zum Werkstück mittels einer mit den Führungseinheiten zusammenwirkenden Einstelleinrichtung einstellbar sind. Bei einer derartigen Langdrehmaschine ist erfindungsgemäß vorgesehen, dass in einem Bearbeitungsmodus die Führungseinheit axial unverschieblich relativ zur Spindelhülse positioniert ist und durch mindestens ein zwischen der Spindelhülse und der Führungseinheit angeordnetes und relativ zu der Spindelhülse und der Führungseinheit bewegbares Stellelement bewegbar ist, welches einen als Keilkörper wirksamen Stellbereich aufweist und welche durch eine Stellkrafterzeugungseinheit bewegbar ist und dass die Führungsflächen durch die Stellkrafterzeugungseinheit kraftsteuerbar in ausschließlich zur Spindelachse radialer Zustellrichtung auf das Werkstück zustellbar sind. Eine derartige Langdrehmaschine hat dieselben Vorteile, wie vorstehend im Zusammenhang mit der erfindungsgemäßen Führungseinheit beschrieben.

Weitere vorteilhafte Ausgestaltungen einer derartigen Langdrehmaschine ergeben sich aus den vorstehend beschriebenen vorteilhaften Ausführungsformen einer erfindungsgemäßen Führungseinrichtung.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Teilansicht einer erfindungsgemäßen Langdrehmaschine mit einer erfindungsgemäßen Führungseinrichtung;

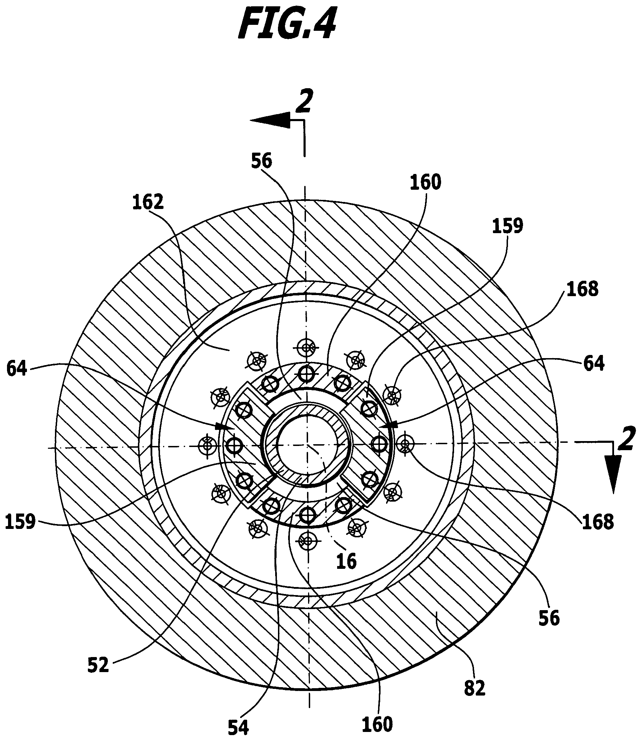

- Fig. 2: eine vergrößerte Schnittdarstellung durch die erfindungsgemäße Führungseinrichtung geschnitten Längs Linie 2-2 in Fig. 4;
- Fig. 3: einen Schnitt längs Linie 3-3 in Fig. 2;
- Fig. 4: einen Schnitt längs Linie 4-4 in Fig. 2;

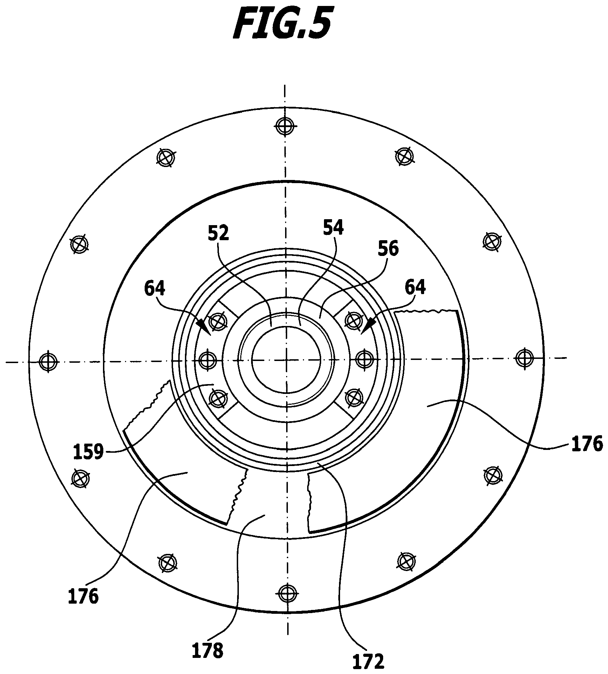

- Fig. 5: einen Schnitt längs Linie 5-5 in Fig. 2 und
- Fig. 6: einen Schnitt ähnlich Fig. 2 durch ein zweites Ausführungsbeispiel einer erfindungsgemäßen Führungseinrichtung.

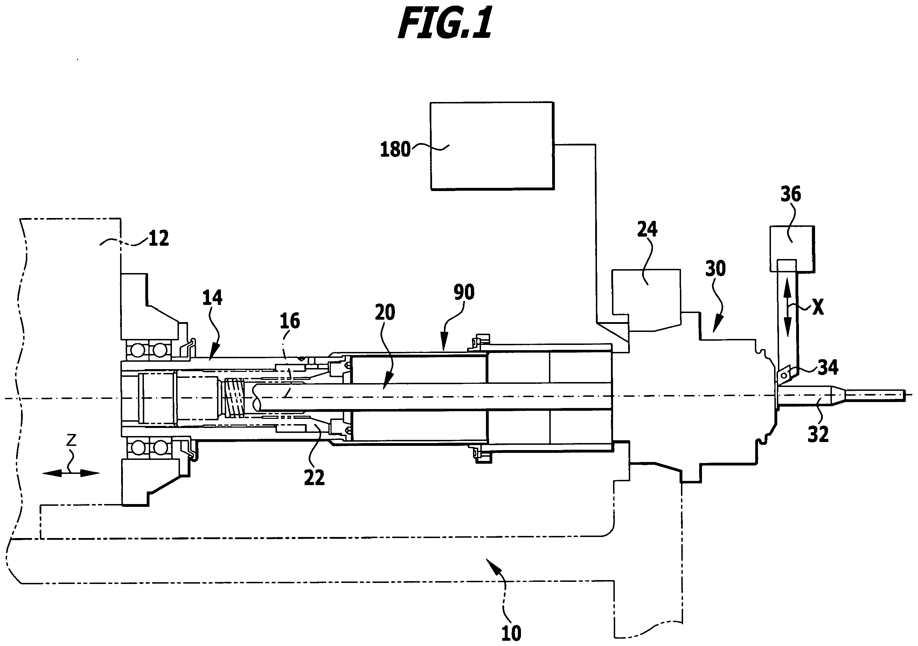

Ein in Fig. 1 dargestelltes Ausführungsbeispiel einer erfindungsgemäßen Langdrehmaschine umfasst ein Maschinengestell 10, welches ein Spindelgehäuse 12 trägt, in welchem eine Arbeitsspindel 14 um eine Spindelachse 16 drehbar gelagert ist.

In der Arbeitsspindel 14 ist ein als Ganzes mit 20 bezeichnetes Werkstück, beispielsweise eine Werkstoffstange, aufgenommen und durch eine Spannzange 22 der Arbeitsspindel 14 spannbar, um die Werkstoffstange 20 einerseits um die Spindelachse 16 rotierend antreiben zu können und andererseits in Richtung der Spindelachse 16 beispielsweise dadurch verschieben zu können, dass das Spindelgehäuse 12 relativ zum Maschinengestell 10 in einer Z-Richtung verschiebbar geführt ist.

An dem Maschinengestell 10 ist außerdem an einem Träger 24 eine Führungseinrichtung 30 gehalten, welche von der Werkstoffstange 20 ebenfalls durchsetzt ist und welche dazu dient, die Werkstoffstange 20 in Richtung der Spindelachse 16 im Abstand von der Arbeitsspindel 14 zusätzlich zu führen, um die Werkstoffstange 20 in einem auf einer der Arbeitsspindel 14 gegenüberliegenden Seite der Führungseinrichtung 30 überstehenden Bereich 32 mittels eines Werkzeugs 34 bearbeiten zu können, wobei das Werkzeug 34 an einem relativ zum Maschinengestell 10 bewegbaren Werkzeugträger 36 gehalten ist.

Bei dem dargestellten Ausführungsbeispiel der Langdrehmaschine erfolgt die Bearbeitung der Werkstoffstange 20 beispielsweise nach dem Prinzip des Langdrehens mit einer relativ zum Maschinengestell 10 feststehend angeordneten Führungseinrichtung 30, wobei das Werkzeug 34 nahe der Führungseinrichtung 30 in dem Bereich 32 der Werkstoffstange 20 bearbeitet wird, während eine Bewegung des Werkzeugs 34 und der Werkstoffstange 20 relativ zueinander in Z-Richtung dadurch erfolgt, dass die Werkstoffstange 20 durch Verschieben der Arbeitsspindel 14 mitsamt dem Spindelgehäuse 12 in Z-Richtung relativ zum Maschinengestell 10 bewegbar ist und somit die Werkstoffstange 20 zur Erzeugung der Relativbewegung zwischen dem Werkzeug 34 und der Werkstoffstange 20 durch die Führungseinrichtung 30 in Richtung der Spindelachse 16 hindurch verschoben wird.

Alternativ ist es jedoch aber auch denkbar, die Arbeitsspindel 14 auf dem Maschinengestell 10 feststehend anzuordnen und das Werkzeug 34 mitsamt der Führungseinrichtung 30 relativ zur Arbeitsspindel 14 in Z-Richtung und somit auch relativ zum Maschinengestell 10 zu bewegen.

Zum Erzielen guter Ergebnisse, insbesondere zum Erzielen hoher Genauigkeiten von Durchmessern, bei der Bearbeitung der Werkstoffstange 20 im Bereich 32 ist es beim Langdrehen erforderlich, dass die Werkstoffstange 20 sich im Bereich der Führungseinrichtung 30 relativ zur Spindelachse 16 radial möglichst exakt geführt wird, jedoch dennoch die Möglichkeit besteht, eine definierte Relativverschiebung der Werkstoffstange 20 zur Führungseinrichtung 30 in Z-Richtung zuzulassen, um eine Relativbewegung zwischen dem Werkzeug 34 und der Werkstoffstange 20 in Z-Richtung zu ermöglichen.

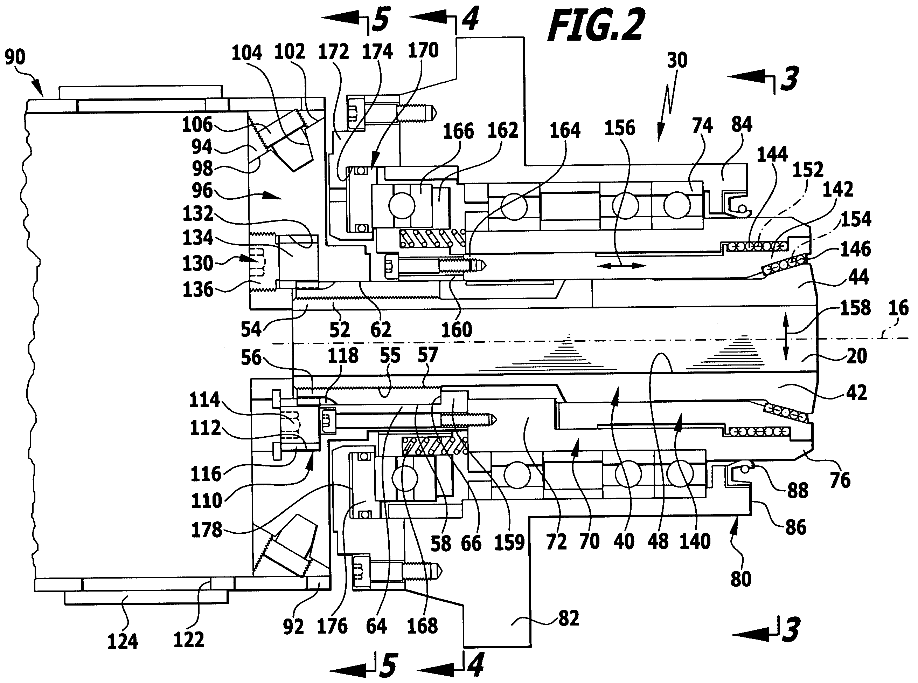

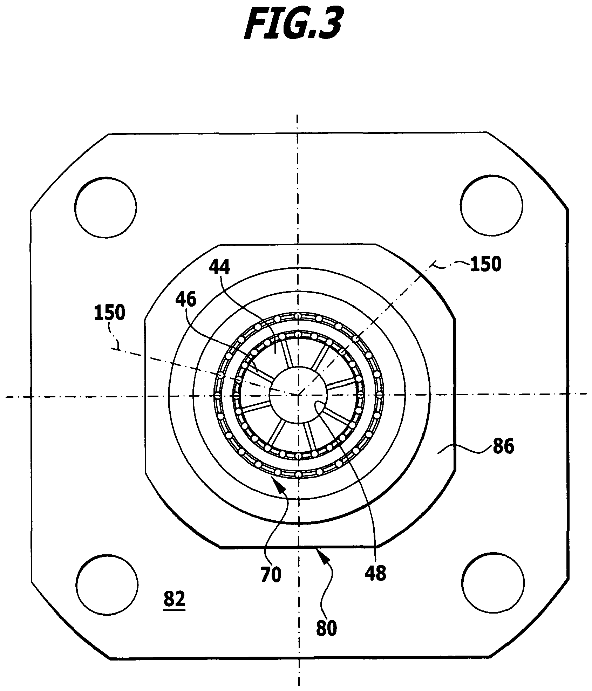

Die erfindungsgemäße Führungseinrichtung umfasst, wie in Fig. 2 dargestellt, eine Führungseinheit 40, welche in einem ersten Abschnitt 42 in radialer Richtung zur Spindelachse 16 bewegbare Führungselemente 44 umfasst, die, wie in Fig. 3 dargestellt, durch Trennfugen 46 voneinander getrennt sind und die der Werkstoffstange 20 zugewandte Führungsflächen 48 bilden, mit welchen die Führungselemente 44 in der Lage sind, die Werkstoffstange 20 in radialer Richtung zur Spindelachse 16 mit einer Kraft zu beaufschlagen.

Ferner umfasst die Führungseinheit 40 in einem zweiten Abschnitt 52 eine um die Spindelachse 16 umlaufend ausgebildete Hülse 54, an welche die Führungselemente 44 vorzugsweise einstückig angeformt sind.

Die Hülse 54 umschließt auf ihrer der Werkstoffstange abgewandten Seite eine Positionierhülse 56, welche auf der Hülse 54 sitzt und mit einem Innengewinde 57 in ein Außengewinde 55 der Hülse 54 eingreift. Die Positionierhülse 56 sitzt mit ihrer Mantelseite 58 drehbar in einer Aufnahme 62 eines Antriebsabschnitts 64 einer als Ganzes mit 70 bezeichneten Spindelhülse, wobei die Aufnahme 62 noch eine Flanschfläche 66 aufweist, welche die Aufnahme 62 in Richtung des ersten Abschnitts 42 der Führungseinheit 40 begrenzt und somit die Positionierhülse gegen eine Bewegung in Richtung parallel zur Spindelachse 16 festlegt.

Die Spindelhülse 70 weist ferner einen Lagerabschnitt 72 auf, welcher durch Radiallager 74 drehbar in einem Außengehäuse 80 um die Spindelachse 16 gelagert ist, wobei das Außengehäuse 80 einen Flansch 82 aufweist, mit welchem dieses an dem Träger 24 des Maschinengestells 10 fixierbar ist und eine sich ausgehend von dem Flansch 82 erstreckende Gehäusehülse 84, die sich bis zu einem dem Flansch 82 gegenüberliegenden arbeitsraumseitigen Ende 86 erstreckt.

Vorzugsweise erstreckt sich innerhalb der Gehäusehülse 84 auch die in dieser drehbar gelagerte Spindelhülse 70 ebenfalls bis zu einem arbeitsraumseitigen Ende 76, welches in Richtung der Spindelachse 16 über das arbeitsraumseitige Ende 86 der Gehäusehülse 84 übersteht, wobei zwischen der Gehäusehülse 84 und der Spindelhülse 70 im Bereich des arbeitsraumseitigen Endes 86 eine Dichtung 88 angeordnet ist, die ein Rotieren der Spindelhülse 70 gemeinsam mit der Arbeitsspindel 14 relativ zur Gehäusehülse 84 erlaubt, jedoch zwischen beiden gegen ein Eindringen von Flüssigkeit und Festschmutz abdichtet.

Der rotierende Antrieb der Spindelhülse 70 synchron zur Arbeitsspindel 14 erfolgt über ein mit der Arbeitsspindel 14 drehfest verbundenes Antriebsrohr 90, welches aufgrund eines teleskopähnlichen Aufbaus in Richtung der Spindelachse 16 längenvariabel ist und ein der Führungseinrichtung 30 zugewandtes Ende 92 aufweist, welches einen Verbindungsring 94 umfasst, der mit einem Antriebsflansch 96 des Antriebsabschnitts 64 der Spindelhülse 70 verbindbar ist, wobei der Verbindungsring 94 eine konisch zur Spindelachse 16 verlaufende Abstützfläche 98 aufweist, mit welcher dieser auf einer ebenfalls konisch verlaufenden Stützfläche 102 des Antriebsflansches 96 abstützbar ist, um das Ende 92 des Antriebsrohrs 90 durch die Spindelhülse 70 koaxial zur Spindelachse 16 zu führen.

Außerdem weist der Antriebsflansch 96 eine sich von der Abstützfläche 102 in den Antriebsflansch 96 hinein erstreckende und um die Spindelachse 16 umlaufende Nut 104 auf, in welche den Verbindungsring 94 durchsetzende Fixierschrauben 106 einschraubbar sind, und zwar in Umlaufrichtung an beliebiger Stelle, so dass eine exakte Drehausrichtung der Spindelhülse 70 relativ zur Arbeitsspindel 14 möglich ist, um die Drehstellung der Spindelhülse 70 bezüglich der Spindelachse 16 und die Drehstellung der Arbeitsspindel 14 bezüglich der Spindelachse 16 exakt aufeinander abzustimmen.

Um möglichst wenig rotierende Masse zu erhalten, ist das Antriebsrohr 90 vorzugsweise aus einem kohlefaserverstärkten Material hergestellt ist, das einerseits eine geringe Masse, andererseits eine hohe Steifigkeit aufweist.

Zur axialen Positionierung der Führungseinheit 40 relativ zu der Spindelhülse 70 ist eine als Ganzes mit 110 bezeichnete die Aufnahme 62 und die Positionierhülse 56 umfassende Stelleinheit vorgesehen, welche außerdem noch eine drehbar in einer Bohrung 112 des Antriebsflansches 96 gelagertes Stellritzel 114 aufweist, das mit einer Außenverzahnung 116 versehen ist, die mit einer endseitigen Außenverzahnung 118 der Positionierhülse 56 fluchtet.

Mit dem Stellritzel 114 ist somit die Positionierhülse 56 in der Aufnahme 62 verdrehbar und dadurch aufgrund der ineinandergreifenden Gewinde 55 und 57 der Hülse 54 der Positionierhülse 56 in Richtung parallel zur Spindelachse 16 einstellbar.

Eine axiale Positionierung der Führungseinheit 40 erfolgt durch ein Verdrehen der Positionierhülse 56 und somit des Innengewindes 57 der Positionierhülse 56, welches in das Außengewinde 55 der Hülse 54 eingreift und dadurch die Hülse 54 in Richtung der Spindelachse 16 verschiebt, da die Hülse 54 drehfest relativ zur Spindelhülse 70 angeordnet ist. Folglich bewirkt ein Verdrehen der Positionierhülse 56 eine axiale Verschiebung der Hülse 54 mitsamt der Führungseinheit 40 und somit auch den Führungselementen 44 relativ zur Spindelhülse 70.

Um zusätzlich noch die Drehstellung der Positionierhülse 56 relativ zur Spindelhülse 70 festlegen zu können, ist eine als Ganzes mit 130 bezeichnete Feststelleinheit vorgesehen, welche ein in einer Bohrung 132 im Antriebsflansch 96 angeordnetes Ritzel 134 umfasst, das ebenfalls mit der endseitigen Außenverzahnung 118 kämmt und welches durch eine als Ganzes mit 136 bezeichnete Feststellschraube die ebenfalls in die Bohrung 132 einschraubbar ist, kraftschlüssig relativ zum Antriebsflansch 96 festlegbar ist.

Die Stelleinheit 110 und die Feststelleinheit 130 sind über Durchbrüche 122 in dem Antriebsrohr zugänglich, welche mittels einer auf dem Antriebsrohr verschiebbar gehaltenen Abdeckhülse 124 verschließbar sind um die Geräuschentwicklung zu reduzieren.

Zwischen der Spindelhülse 70 und der Führungseinheit 40 ist ein relativ zur Spindelhülse 70 und der Führungseinheit 40 bewegbares Stellelement 140, vorzugsweise in Form einer Stellhülse, angeordnet, welche sich in einem arbeitsraumseitigen Stellbereich 142 mittels einer Verschiebeführung 144, beispielsweise ausgebildet als Kugelführung, an der Spindelhülse 70 abstützt und welche ebenfalls mit dem Stellbereich 142 über eine innere Verschiebeführung 146 die Führungselemente 44 in radialer Richtung abstützt, wobei die Verschiebeführungen 144 und 146 in Verschieberichtungen 152 bzw. 154 verlaufen, die einerseits in durch die Spindelachse 16 hindurchverlaufenden Radialebenen 150 liegen und andererseits in den jeweiligen Radialebenen 150 in unterschiedlichen Winkeln zur Spindelachse 16 verlaufen, so dass eine Verschiebung des Stellelements 140, insbesondere mit dem Stellbereich 142 in einer zur Spindelachse 16 parallelen Stellrichtung 156 zur einer Bewegung der Führungselemente 44 in einer radial zur Spindelachse 16 verlaufenden Zustellrichtung 158 führt, und zwar auf die Spindelachse 16 zu oder entgegengesetzt zur Zustellrichtung 158 von der Spindelachse 16 weg führt.

Durch die vorstehend beschriebene Festlegung der Führungseinheit 40 relativ zur Spindelhülse 70 in Richtung der Spindelachse 16 mittels der Stelleinheit 110 führt die Bewegung des Stellelements 140 mit den Stellbereichen 142 in der Stellrichtung 156 zu einer ausschließlich radial verlaufenden Bewegung der Führungselemente 44 in Zustellrichtung 158 bezogen auf eine in Richtung der Spindelachse 16 festgelegte Position der Spindelhülse 70.

Zur Bewegung des Stellelements 140 in der Stellrichtung 156 ist das Stellelement 140 mit einem Stellring 162 verbunden, welcher beispielsweise Segmente 159 des Antriebsabschnitts 64 teilweise umschließend angeordnet ist und mit zwischen den Segmenten 159 des Antriebsabschnitts 64 liegenden Segmenten 160 beispielsweise an einem Ende 164 des Stellelements 140 fixiert ist.

Der Stellring 162, der genau so wie das Stellelement 140 relativ zur Spindelhülse 70 drehfest angeordnet ist, ist über ein Drehlager 166 mit einer Stellkrafterzeugungseinheit 170 gekoppelt, die drehfest relativ zum Außengehäuse 80 angeordnet ist und eine in einem Flanschkörper 172 des Außengehäuses 80 angeordnete Druckkammer 174 umfasst, welche beispielsweise um die Spindelachse 16 umlaufend ausgebildet ist und in welcher ein ebenfalls beispielsweise um die Spindelachse 16 umlaufend ausgebildeter Druckkolben 176 fixiert ist, der über das Drehlager 166 mit dem Stellring 162 gekoppelt ist, insbesondere auf den Stellring 162 einwirkt.

Vorzugsweise ist der Stellring 162 noch durch federelastische Elemente 168, die sich an der Spindelhülse 70 abstützen, so beaufschlagt, dass der Stellring 162 über das Drehlager 166 die Tendenz zeigt, den Druckkolben 176 in die Druckkammer 174 einzuschieben und somit ein von der Druckkammer 174 und dem Druckkolben 176 begrenztes Druckkammervolumen 178 minimal zu halten.

Wird jedoch die Druckkammer 174 durch ein unter Druck stehendes Medium, beispielsweise Luft- oder Hydraulikmedium, beaufschlagt, so wird das Druckkammervolumen 178 vergrößert und der Druckkolben 176 wirkt über das Drehlager 166 auf den Stellring 162 entgegengesetzt zur Kraft der federelastischen Elemente 168, so dass über den Stellring 162 eine Verschiebung des gesamten Stellelements 140 in der Stellrichtung 156, und zwar in Richtung auf das arbeitsraumseitige Ende 76 der Spindelhülse 70 zu erfolgt, wobei die Verschieberichtungen 152 und 154 der Verschiebeführungen 144 und 146 so ausgerichtet sind, dass eine derartige Bewegung des Stellelements 140 mit dem Stellbereich 142 zur Bewegung der Führungselemente 44 in Richtung auf die Spindelachse 16 zu führt.

Wird dagegen im Gegenzug der Druck im Druckkammervolumen 178 reduziert, so bewirken die federelastischen Elemente 168 eine Bewegung des Stellrings 162 in Richtung einer Verringerung des Druckkammervolumens 178 und außerdem eine Verschiebung des Stellelements 140 von dem arbeitsraumseitigen Ende 76 der Spindelhülse 70 weg, so dass die Führungselemente 44 die Möglichkeit haben, sich aufgrund ihrer eigenen elastischen Vorspannung, die radial von der Spindelachse 16 weg gerichtet ist, entgegengesetzt zur Zustellrichtung 158 radial von der Spindelachse 16 weg zu bewegen und somit die Beaufschlagung der Werkstoffstange 20 zu reduzieren.

Mit der erfindungsgemäßen Lösung besteht somit die Möglichkeit, einerseits durch Verschiebung der Führungseinheit 40 relativ zur Spindelhülse 70 und zum Stellelement 140 mit der Stelleinheit 110 aufgrund des Zusammenwirkens der Führungselemente 44 des Stellelements 140 und der Führungshülse 70 als Keilgetriebe eine Grundeinstellung der Position der Führungsflächen 48 der Führungselemente 44 in der Zustellrichtung 158 vorzugeben, das heißt einen radialen Abstand der Führungsflächen 48 der Führungselemente 44 vorzugeben, wobei diese Position der Führungsflächen 48 durch eine manuelle Einstellung der Stelleinheit 110 erfolgt.

Um die Beaufschlagung der Werkstoffstange 20 in Richtung radial zur Spindelachse 16, die durch die Führungselemente 44 geführt ist im Bereich der Führungsflächen 48 in einem Bearbeitungsmodus, also während einer Bearbeitung des Werkstücks 20, einstellen zu können, ist zusätzlich noch die Stellkrafterzeugungseinheit 170 vorgesehen, die über das Drehlager 166 auf den Stellring 162 wirkt um das Stellelement 140 in der Stellrichtung 156 einstellbar zu positionieren, wobei die Stellkrafterzeugungseinheit 170 durch ein Medium, beispielsweise Luft- oder Hydraulikmedium mit variierender Kraft beaufschlagbar ist, um somit auch die Kraft, mit welcher die Führungsflächen 48 der Führungselemente 44 auf die Werkstoffstange 20 wirken, einstellen zu können.

Vorzugsweise ist hierzu eine Maschinensteuerung 180 vorgesehen, welche die üblichen Bearbeitungsvorgänge bei der Langdrehmaschine steuert, das heißt die Verschiebung der Arbeitsspindel 14 in Z-Richtung, die Zustellbewegung des Werkzeugs 34 aufgrund einer Bewegung des Werkzeugträgers 36 mindestens in X-Richtung sowie eine Drehzahl der Arbeitsspindel 14.

Ferner steuert die Maschinensteuerung 180 einen Druck des der Druckkammer 174 zugeführten Mediums abhängig von dem jeweiligen Bearbeitungsvorgang.

Erfolgt beispielsweise bei der Bearbeitung der Werkstoffstange ein Vorschub in Z-Richtung, so wird der Druck des Mediums reduziert, um die Kraft der Führungsflächen 48 in Zustellrichtung 158 auf die Werkstoffstange 20 zu verringern und somit einen Vorschub der Werkstoffstange 20 in Z-Richtung mit möglichst geringer Reibung in der Führungseinheit 40 zu ermöglichen, während im Fall einer exakten Bearbeitung der Werkstoffstange 20 mittels des Werkzeugs 34 durch Vorschub desselben in X-Richtung ohne Vorschub der Werkstoffstange 20 in Z-Richtung der Druck des Mediums erhöht werden kann um die Kraft der Führungsflächen 48 der Führungselemente 44 auf die Werkstoffstange 20 in der Zustellrichtung 58 zu erhöhen, somit die Werkstoffstange 20 präziser in der Führungseinrichtung 30 zu führen und damit die Präzision bei der Bearbeitung der Werkstoffstange 20 mittels des Werkzeugs 34 in X-Richtung zu erhöhen.

Alternativ zu einer derartigen Drehbearbeitung besteht auch die Möglichkeit, bei exakter Führung der Werkstoffstange 20 in radialer Richtung nicht nur Drehbearbeitungen, sondern auch präzise Fräsbearbeitungen vorzusehen.

Soll die Werkstoffstange 20 in die Führungseinrichtung 30 eingeschoben werden, so wird der Druck des Mediums beispielsweise auf Null oder auf einen Minimalwert reduziert, so dass zwischen den Führungsflächen 48 und der Werkstoffstange 20 ein geringes Spiel entsteht, und die Werkstoffstange 20 leicht in die Führungseinheit 40 einschiebbar ist.

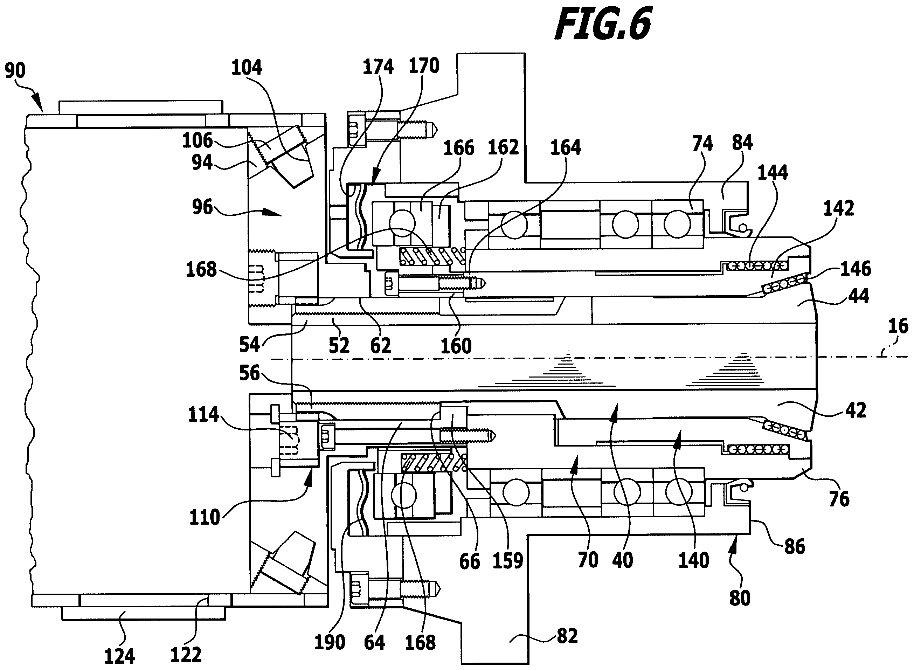

Bei einem zweiten Ausführungsbeispiel, dargestellt in Fig. 6, ist die Druckkammer 174 nicht durch einen Druckkolben 176 verschlossen, sondern durch eine Membran 190, beispielsweise eine Metallmembran, welche auf das Drehlager 166 wirkt und welche beispielsweise wellenförmig ausgebildet ist, um sich bei Druckbeaufschlagung der Druckkammer 174 in Richtung des Stellrings 162 aufzuwölben und das Drehlager 166 zu beaufschlagen oder aufgrund der Kraft der federelastischen Elemente 168, die auf den Stellring 162 und auch das Drehlager 166 wirken, sich in eine Richtung zu bewegen, die das Druckkammervolumen 178 minimal werden lässt.

Eine derartige Membran 190 hat den Vorteil, dass diese fest mit dem Flanschkörper 172 außerhalb der Druckkammer 174 verbunden werden kann und somit die Haftreibung des Druckkolbens 176 in der Druckkammer 174 vermeidet, so dass damit eine präzisere Steuerung der Bewegung in Stellrichtung 156 möglich ist.

Im Übrigen sind bei dem zweiten Ausführungsbeispiel diejenigen Elemente, die mit dem ersten Ausführungsbeispiel identisch sind, mit denselben Bezugszeichen versehen, so dass diesbezüglich vollinhaltlich auf die Ausführungen zum ersten Ausführungsbeispiel Bezug genommen wird.

## Patentansprüche

1. Führungseinrichtung (30) für ein in einer Arbeitsspindel (14) aufgenommenes Werkstück (20) einer Langdrehmaschine, wobei die Führungseinrichtung (30) und das Werkstück (20) in Richtung einer Spindelachse (16) der Arbeitsspindel (14) relativ zueinander bewegbar sind, wobei die Führungseinrichtung (30) eine um die Spindelachse (16) drehbar in einem Außengehäuse (80) gelagerte Spindelhülse (70) sowie eine in der Spindelhülse (70) aufgenommene Führungseinheit (40) aufweist, die das Werkstück mittels Führungsflächen (48) führt, wobei die Führungsflächen (48) in radialer Richtung der Spindelachse (16) relativ zum Werkstück (20) mittels einer mit den Führungseinheiten (40) zusammenwirkenden Einstelleinrichtung einstellbar sind,
**dadurch gekennzeichnet, dass** in einem Bearbeitungsmodus die Führungseinheit (40) axial unverschieblich relativ zur Spindelhülse (70) positioniert ist und durch mindestens ein zwischen der Spindelhülse (70) und der Führungseinheit (40) angeordnetes und relativ zu der Spindelhülse (70) und der Führungseinheit (40) bewegbares Stellelement (140) bewegbar ist, welches einen als Keilkörper wirksamen Stellbereich (142) aufweist und welches durch eine Stellkrafterzeugungseinheit (170) bewegbar ist, und dass die Führungsflächen (48) durch die Stellkrafterzeugungseinheit (170) kraftsteuerbar in ausschließlich zur Spindelachse (16) radialer Zustellrichtung (158) auf das Werkstück (20) zustellbar sind.

2. Führungseinrichtung nach Anspruch 1, **dadurch gekennzeichnet, dass** die Stellkrafterzeugungseinheit (170) als eine durch ein unter Druck stehendes Medium beaufschlagbare Stellkrafterzeugungseinheit ausgebildet ist.

3. Führungseinrichtung nach Anspruch 2, **dadurch gekennzeichnet, dass** die Stellkrafterzeugungseinheit (170) relativ zur Aufnahme nichtdrehend angeordnet ist.

4. Führungseinrichtung nach Anspruch 3, **dadurch gekennzeichnet, dass** zwischen der Stellkrafterzeugungseinheit (170) und dem Stellelement (140) ein Drehlager (166) wirksam ist, um eine Stellbewegung auf das mit der Spindelhülse (70) und der Führungseinheit (40) mitdrehende Stellelement (140) zu übertragen.

5. Führungseinrichtung nach einem der voranstehenden Ansprüche,
**dadurch gekennzeichnet, dass** das Stellelement (140) parallel zur Spindelachse (16) bewegbar ist.

6. Führungseinrichtung nach einem der voranstehenden Ansprüche,
**dadurch gekennzeichnet, dass** der Stellbereich (142) zusammen mit der Spindelhülse (70) und Führungselementen (44) der Führungseinheit (40) ein Keilgetriebe bildet.

7. Führungseinrichtung nach Anspruch 6, **dadurch gekennzeichnet, dass** zwischen der Spindelhülse (70) und dem Stellbereich (142) Verschiebeführungen (144) angeordnet sind, die den Stellbereich (142) in Richtung quer zur Spindelachse (16) abstützen.

8. Führungseinrichtung nach Anspruch 6 oder 7, **dadurch gekennzeichnet, dass** zwischen dem Stellbereich (142) und den Führungselementen (44) der Führungseinheit (40) Verschiebeführungen (146) angeordnet sind, welche die Führungselemente (44) in Richtung quer zur Spindelachse (16) abstützen.

9. Führungseinrichtung nach Anspruch 7 oder 8, **dadurch gekennzeichnet, dass** die Verschiebeführungen (144, 146) Verschieberichtungen (152, 154) aufweisen, die in einem spitzen Winkel zueinander verlaufen.

10. Führungseinrichtung nach einem der Ansprüche 6 bis 9, **dadurch gekennzeichnet, dass** die Verschiebeführungen (144, 146) als wälzkörpergelagerte Führungen ausgebildet sind.

11. Führungseinrichtung nach einem der voranstehenden Ansprüche,
**dadurch gekennzeichnet, dass** die Relativposition der Führungseinheit (40) zu der Spindelhülse (70) in einem Einstellmodus durch eine Einstelleinrichtung (110) einstellbar ist.

12. Führungseinrichtung nach einem der voranstehenden Ansprüche,
**dadurch gekennzeichnet, dass** ein Druck des der Stellkrafterzeugungseinheit (170) zugeführten Mediums durch eine Maschinensteuerung (180) steuerbar ist.

13. Führungseinrichtung nach Anspruch 12, **dadurch gekennzeichnet, dass** durch die Maschinensteuerung (180) der Druck im Bearbeitungsmodus bei unterschiedlichen Bearbeitungsvorgängen unterschiedlich einstellbar ist.

14. Langdrehmaschine umfassend ein Maschinengestell (10), eine am Maschinengestell (10) gehaltene Arbeitsspindel (14), eine am Maschinengestell (10) gehaltene Führungseinrichtung (30) für ein in der Arbeitsspindel (14) aufgenommenes Werkstück (20), wobei die Führungseinrichtung (30) und das Werkstück (20) in Richtung einer Spindelachse (16) der Arbeitsspindel (14) relativ zueinander bewegbar sind, wobei die Führungseinrichtung (30) eine um die Spindelachse (16) drehbar in einem Außengehäuse (80) gelagerte Spindelhülse (70) sowie eine in der Spindelhülse (70) aufgenommene Führungseinheit (40) aufweist, die das Werkstück mittels Führungsflächen (48) führt, und wobei die Führungsflächen (48) in radialer Richtung der Spindelachse (16) relativ zum Werkstück (20) mittels einer mit den Führungseinheiten (40) zusammenwirkenden Einstelleinrichtung einstellbar sind,
**dadurch gekennzeichnet, dass** in einem Bearbeitungsmodus die Führungseinheit (40) axial unverschieblich relativ zur Spindelhülse (70) positioniert ist und durch mindestens ein zwischen der Spindelhülse (70) und der Führungseinheit (40) angeordnetes und relativ zu der Spindelhülse (70) und der Führungseinheit (40) bewegbares Stellelement (140) bewegbar ist, welches einen als Keilkörper wirksamen Stellbereich (142) aufweist und welches durch eine Stellkrafterzeugungseinheit (170) bewegbar ist, und dass die Führungsflächen (48) durch die Stellkrafterzeugungseinheit (170) kraftsteuerbar in ausschließlich zur Spindelachse (16) radialer Zustellrichtung (158) auf das Werkstück 820) zustellbar sind.

15. Langdrehmaschine nach Anspruch 14, **dadurch gekennzeichnet, dass** diese nach einem der Ansprüche 2 bis 13 ausgebildet ist.

## Claims

1. Guide device (30) for a workpiece (20) accommodated in a work spindle (14) of a long-turning lathe, wherein the guide device (30) and the workpiece (20) are movable relative to one another in the direction of a spindle axis (16) of the work spindle (14), wherein the guide device (30) has a spindle sleeve (70) mounted in an outer housing (80) for rotation about the spindle axis (16) as well as a guide unit (40) accommodated in the spindle sleeve (70) and guiding the workpiece by means of guide surfaces (48), wherein the guide surfaces (48) are adjustable relative to the workpiece (20) in a radial direction of the spindle axis (16) by means of an adjusting device interacting with the guide units (40),
**characterized in that** in a machining mode the guide unit (40) is positioned so as to be axially non-displaceable relative to the spindle sleeve (70) and movable by at least one actuator element (140) arranged between the spindle sleeve (70) and the guide unit (40) and movable relative to the spindle sleeve (70) and the guide unit (40), said actuator element having an actuator region (142) effective as a wedge member and being movable by a unit (170) for generating an actuating force, and that the guide surfaces (48) are advanceable towards the workpiece (20) by means of the unit (170) for generating an actuating force in a force-controlled manner in an advancing direction (158) radial only to the spindle axis (16).

2. Guide device as defined in claim 1, **characterized in that** the unit (170) for generating an actuating force is formed as a unit for generating an actuating force adapted to be acted on by a medium subject to pressure.

3. Guide device as defined in claim 2, **characterized in that** the unit (170) for generating an actuating force is arranged so as to be non-rotating relative to the holder.

4. Guide device as defined in claim 3, **characterized in that** a pivot bearing (166) is operative between the unit (170) for generating an actuating force and the actuator element (140) in order to transfer an actuating movement to the actuator element (140) co-rotating with the spindle sleeve (70) and the guide unit (40).

5. Guide device as defined in any one of the preceding claims, **characterized in that** the actuator element (140) is movable parallel to the spindle axis (16).

6. Guide device as defined in any one of the preceding claims, **characterized in that** the actuator region (142) forms a wedge gear together with the spindle sleeve (70) and guide elements (44) of the guide unit (40).

7. Guide device as defined in claim 6, **characterized in that** displacement guides (144) are arranged between the spindle sleeve (70) and the actuator region (142) and support the actuator region (142) in the direction transverse to the spindle axis (16).

8. Guide device as defined in claim 6 or 7, **characterized in that** displacement guides (146) are arranged between the actuator region (142) and the guide elements (44) of the guide unit (40) and support the guide elements (44) in the direction transverse to the spindle axis (16).

9. Guide device as defined in claim 7 or 8, **characterized in that** the displacement guides (144, 146) have displacement directions (152, 154) extending at an acute angle to one another.

10. Guide device as defined in any one of claims 6 to 9, **characterized in that** the displacement guides (144, 146) are designed as guides mounted on rolling elements.

11. Guide device as defined in any one of the preceding claims, **characterized in that** the position of the guide unit (40) relative to the spindle sleeve (70) is adjustable by an adjusting device (110) in an adjusting mode.

12. Guide device as defined in any one of the preceding claims, **characterized in that** the pressure of the medium supplied to the unit (170) for generating an actuating force is controllable by a machine control (180).

13. Guide device as defined in claim 12, **characterized in that** the pressure during the machining mode is variably adjustable by the machine control (180) for different machining processes.

14. Long-turning lathe comprising a machine frame (10), a work spindle (14) held on the machine frame (10), a guide device (30) for a workpiece (20) accommodated in the work spindle (14), said guide device being held on the machine frame (10), wherein the guide device (30) and the workpiece (20) are movable relative to one another in the direction of a spindle axis (16) of the work spindle (14), wherein the guide device (30) has a spindle sleeve (70) mounted in an outer housing (80) for rotation about the spindle axis (16) as well as a guide unit (40) accommodated in the spindle sleeve (70) and guiding the workpiece by means of guide surfaces (48) and wherein the guide surfaces (48) are adjustable relative to the workpiece (20) in a radial direction of the spindle axis (16) by means of an adjusting device interacting with the guide units (40),
**characterized in that** in a machining mode the guide unit (40) is positioned so as to be axially non-displaceable relative to the spindle sleeve (70) and movable by at least one actuator element (140) arranged between the spindle sleeve (70) and the guide unit (40) and movable relative to the spindle sleeve (70) and the guide unit (40), said actuator element having an actuator region (142) effective as a wedge member and being movable by a unit (170) for generating an actuating force, and that the guide surfaces (48) are advanceable towards the workpiece (20) by means of the unit (170) for generating an actuating force in a force-controlled manner in an advancing direction (158) radial only to the spindle axis (16).

15. Long-turning lathe as defined in claim 14, **characterized in that** it is designed in accordance with any one of claims 2 to 13.

## Revendications

1. Dispositif de guidage (30) pour une pièce à usiner (20) d'une machine-outil à poupée mobile, la pièce à usiner (20) étant logée dans une broche de travail (14), dans lequel le dispositif de guidage (30) et la pièce à usiner (20) sont mobiles l'un par rapport à l'autre en direction d'un axe de broche (16) de la broche de travail (14), le dispositif de guidage (30) présentant une douille de broche (70) positionnée dans un carter extérieur de manière à pouvoir tourner autour de l'axe de broche (16), ainsi qu'une unité de guidage (40) logée dans la douille de broche (70), laquelle unité guide la pièce à usiner au moyen de surfaces de guidage (48), les surfaces de guidage (48) pouvant être réglées dans le sens radial de l'axe de broche (16) par rapport à la pièce à usiner (20) au moyen d'un dispositif de réglage qui coopère avec les unités de guidage (40),
**caractérisé en ce que**, dans un mode usinage, l'unité de guidage (40) est positionnée de manière axialement immobile par rapport à la douille de broche (70) et est mobile grâce à au moins un élément de réglage (140), qui est disposé entre la douille de broche (70) et l'unité de guidage (40) et qui est mobile par rapport à la douille de broche (70) et à l'unité de guidage (40), lequel élément de réglage présente une zone de réglage (142) agissant en tant que corps de clavetage et peut être déplacé grâce à une unité de production d'une force de réglage (170), et **en ce que** les surfaces de guidage (48) peuvent être approchées de la pièce à usiner (20), de manière à être commandées par la force par l'unité de production de force de réglage (170) exclusivement dans le sens d'approche (158) radial par rapport à l'axe de broche (16).

2. Dispositif de guidage selon la revendication 1, **caractérisé en ce que** l'unité de production de force de réglage (170) est conçue comme une unité de production de force de réglage pouvant être sollicitée par un fluide sous pression.

3. Dispositif de guidage selon la revendication 2, **caractérisé en ce que** l'unité de production de force de réglage (170) est disposée de manière non tournante par rapport au logement.

4. Dispositif de guidage selon la revendication 3, **caractérisé en ce qu'**un coussinet de pivotement (166) est actif entre l'unité de production de force de réglage (170) et l'élément de réglage (140) afin de transmettre un mouvement de réglage à l'élément de réglage (140) qui tourne en même temps que la douille de broche (70) et l'unité de guidage (40).

5. Dispositif de guidage selon l'une quelconque des revendications précédentes, **caractérisé en ce que** l'élément de réglage (140) peut être déplacé parallèlement à l'axe de broche (16).

6. Dispositif de guidage selon l'une quelconque des revendications précédentes, **caractérisé en ce que** la zone de réglage (142) forme un engrenage à coin avec la douille de broche (70) et des éléments de guidage (44) de l'unité de guidage (40).

7. Dispositif de guidage selon la revendication 6, **caractérisé en ce que**, entre la douille de broche (70) et la zone de réglage (142) se trouvent des coulisses de déplacement (144) qui soutiennent la zone de réglage (142) dans le sens transversal à l'axe de broche (16).

8. Dispositif de guidage selon la revendication 6 ou 7, **caractérisé en ce que**, entre la zone de réglage (142) et les éléments de guidage (44) de l'unité de guidage (40) sont disposées des coulisses de déplacement (146) qui soutiennent les éléments de guidage (44) dans le sens transversal à l'axe de broche (16).

9. Dispositif de guidage selon la revendication 7 ou 8, **caractérisé en ce que** les coulisses de déplacement (144, 146) présentent des sens de déplacement (152, 154) qui forment un angle aigu.

10. Dispositif de guidage selon l'une quelconque des revendications 6 à 9, **caractérisé en ce que** les coulisses de déplacement (144, 146) sont conçues en tant que coulisses sur organes de roulement.

11. Dispositif de guidage selon l'une quelconque des revendications précédentes, **caractérisé en ce que** la position relative de l'unité de guidage (40) par rapport à la douille de broche (70) peut être réglée, dans un mode réglage, par un dispositif de réglage (110).

12. Dispositif de guidage selon l'une quelconque des revendications précédentes, **caractérisé en ce qu'**une pression du fluide acheminé vers l'unité de production de force de réglage (170) peut être commandée par une commande de machine (180).

13. Dispositif de guidage selon la revendication 12, **caractérisé en ce que** la commande de machine (180) permet de régler différemment la pression en mode usinage en cas d'opérations d'usinage différentes.

14. Machine-outil à poupée mobile comprenant un châssis (10), une broche de travail (14) maintenue sur le châssis (10), un dispositif de guidage (30), maintenu sur le châssis (10), pour une pièce à usiner (20) logée dans la broche de travail (14), le dispositif de guidage (30) et la pièce à usiner (20) pouvant se déplacer l'un par rapport à l'autre dans le sens d'un axe de broche (16) de la broche de travail (14), le dispositif de guidage (30) présentant une douille de broche (70) positionnée dans un carter extérieur (80) de manière à pouvoir tourner autour de l'axe de broche (16), ainsi qu'une unité de guidage (40), qui est logée dans la douille de broche (70) et qui guide la pièce à usiner au moyen de surfaces de guidage (48), et les surfaces de guidage (48) pouvant être réglées dans le sens radial de l'axe de broche (16) par rapport à la pièce à usiner (20) au moyen d'un dispositif de réglage qui coopère avec les unités de guidage (40),
**caractérisé en ce que**, dans un mode usinage, l'unité de guidage (40) est positionnée de manière axialement immobile par rapport à la douille de broche (70) et est mobile grâce à au moins un élément de réglage (140), qui est disposé entre la douille de broche (70) et l'unité de guidage (40) et qui est mobile par rapport à la douille de broche (70) et à l'unité de guidage (40), lequel élément de réglage présente une zone de réglage (142) agissant en tant que corps de clavetage et peut être déplacé grâce à une unité de production d'une force de réglage (170), et **en ce que** les surfaces de guidage (48) peuvent être approchées de la pièce à usiner (20), de manière à être commandées par la force par l'unité de production de force de réglage (170) exclusivement dans le sens d'approche (158) radial par rapport à l'axe de broche (16).

15. Machine-outil à poupée mobile selon la revendication 14, **caractérisée en ce qu'**elle est conçue selon l'une quelconque des revendications 2 à 13.
